# FASCICULE DE BREVET EUROPEEN

(11) **EP 2 744 693 B1**
(45) Date de publication et mention de la délivrance du brevet: **05.10.2016**
(21) Numéro de dépôt: 12750465.2
(22) Date de dépôt: 02.08.2012
(51) Int. Cl.: B60W 10/06, B60W 10/08, B60W 20/00, B60W 30/192, B60K 6/52, B60W 50/00

(54) **PROCÉDÉ DE COMMANDE DU COUPLE EN MODE ÉLECTRIQUE DANS UN VÉHICULE AUTOMOBILE HYBRIDE**
VERFAHREN ZUR STEUERUNG DES DREHMOMENTS IM STROMMODUS EINES HYBRIDAUTOS
METHOD FOR CONTROLLING THE TORQUE IN ELECTRIC MODE IN A HYBRID AUTOMOTIVE VEHICLE

(30) Priorité: 17.08.2011 FR 1157384
(43) Date de publication de la demande: 25.06.2014
(73) Titulaire: Peugeot Citroën Automobiles SA, 78140 Vélizy-Villacoublay (FR)
(72) Inventeur: GALINAUD, Florian, F-75013 Paris (FR); CROGUENNOC, Tanguy, F-92130 Issy Les Moulineaux (FR)
(86) Numéro de dépôt international: PCT/FR2012/051825
(87) Numéro de publication internationale: WO 2013/024222

(56) Documents cités:
- EP-A2- 1 522 450
- EP-A2- 1 826 088
- FR-A1- 2 912 979
- JP-A- 2010 143 423
- US-A1- 2010 312 422

## Description

L'invention se rapporte à un procédé de commande du couple demandé au groupe motopropulseur dans un véhicule automobile hybride, comprenant un moteur thermique et une machine électrique, dans un mode de roulage dit ZEV (acronyme de l'anglais "Zero Emissions Vehicle", véhicule à zéro émission de gaz d'échappement), c'est-à-dire un mode de roulage purement électrique. La présente invention se rapporte également à un véhicule automobile hybride mettant en oeuvre un tel procédé.

L'invention s'applique à tout type de véhicule hybride, parallèle, série ou à dérivation de puissance.

Dans ces véhicules, la combinaison des deux types d'énergie, thermique et électrique, permet de garantir leur traction tout en optimisant le rendement énergétique et permet donc de diminuer la consommation de carburant et par conséquent la pollution atmosphérique qui en résulte.

Les véhicules hybrides parallèles sont capables de rouler indépendamment grâce à l'énergie thermique du moteur à combustion interne ou grâce à l'énergie électrique grâce à une machine électrique de traction. Pou ce faire, ils sont par exemple équipés d'un ensemble constitué d'un moteur thermique et d'une boîte de vitesse sur le train avant du véhicule et d'une machine électrique placée sur le train arrière.

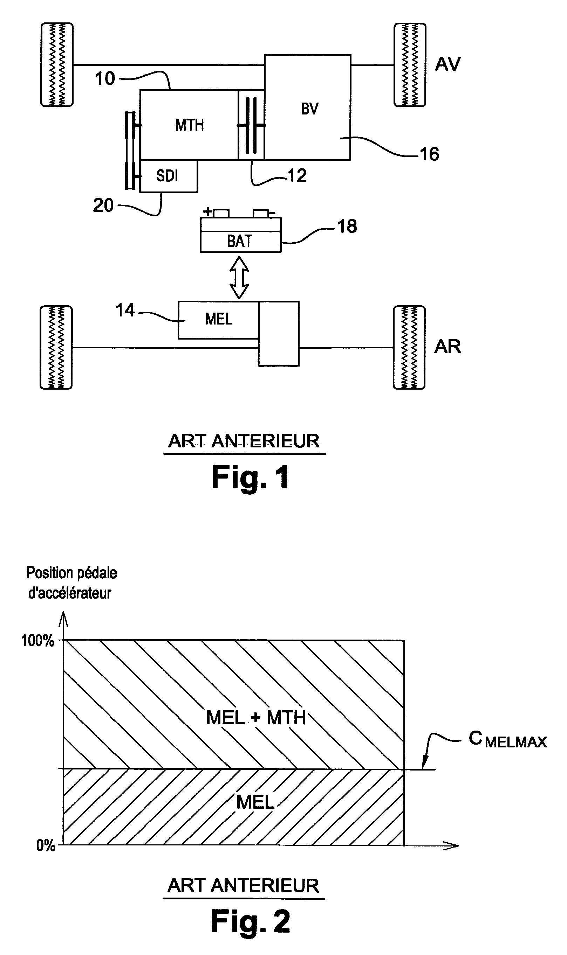

Le schéma de la figure 1 rappelle l'architecture générale d'un tel véhicule hybride selon l'état de la technique.

Il comporte :
- un moteur à combustion interne (MTH) 10, à essence, Diesel ou autre, qui est muni de son volant d'inertie ;
- un système de couplage/découplage réalisé par un embrayage 12 sec, humide ou autre ;
- une machine électrique (MEL) 14 implantée sur le train arrière AR du véhicule ;
- un système de démultiplication (BV) 16 à N rapports discrets réalisé par une boîte de vitesse manuelle pilotée (BVMP), une boîte de vitesse à double embrayage (DCT), une boîte de vitesse automatique (BVA) ou autre ;
- une batterie de puissance (BAT) 18 ou système de stockage d'énergie électrique pour la traction ; et
- un système de démarrage 20 indépendant du moteur thermique (SDI) réalisé par un démarreur piloté, un système de "Stop & Start" ou autre.

Chaque organe est piloté par un calculateur de contrôle rapproché propre. Ces calculateurs sont eux-mêmes commandés par un calculateur unique dit de supervision, qui prend les décisions et synchronise les actions pour répondre à la volonté du conducteur.

Ce superviseur de contrôle, en fonction des situations de vie et de l'état du véhicule, pilote la chaîne de traction. Il décide du mode de roulage, coordonne toutes les phases transitoires et choisit les points de fonctionnement afin d'optimiser la consommation de carburant, la dépollution et l'agrément du véhicule.

La machine électrique fixée sur le train arrière fournit le couple nécessaire pour faire avancer le véhicule quand le moteur thermique est arrêté.

Sur de tels véhicules hybrides, il est possible de rouler en mode ZEV, où seule la machine électrique est utilisée pour mouvoir le véhicule.

Le couple et la puissance de la machine électrique utilisée pour la traction étant couramment inférieurs, respectivement, au couple et à la puissance totaux du groupe motopropulseur (GMP) du véhicule, il en résulte généralement que, dans certaines situations de roulage en mode ZEV i.e. "électrique pur", la machine électrique seule n'est pas suffisante pour assurer la propulsion du véhicule. Il est alors nécessaire de démarrer le moteur thermique pour assurer à la roue le couple demandé par le conducteur.

Par exemple, la puissance du système de traction électrique peut typiquement être de l'ordre de 20 à 30 % de la puissance totale du GMP. Cela signifie que les performances du véhicule en mode électrique sont limitées et ne permettent pas de répondre à toutes les situations d'accélération dont le conducteur pourrait avoir besoin, dans le cas d'un dépassement, d'une insertion ou d'un roulage à haute vitesse par exemple.

Dans l'état de la technique, tel que divulgué par le document US 2010/312 422 A1, dans les situations où la puissance du système électrique ne permet pas d'assurer l'accélération nécessaire, le moteur thermique est démarré pour être utilisé afin d'avoir la puissance totale du GMP à la roue. Ce démarrage est assuré de façon automatique dès que le couple maximum de la machine électrique est atteint.

Pour ce faire, le procédé envisagé par US 2010/312422 A1 est tel que, dans un mode de roulage où seule la machine électrique est utilisée pour mouvoir le véhicule, lorsque la pédale d'accélérateur est dans une position correspondant à une valeur de couple demandé supérieure ou égale au couple maximal pouvant être fourni par la machine électrique et strictement inférieure à un seuil prédéterminé, le moteur thermique reste à l'arrêt et la machine électrique fournit ledit couple demandé (donc la machine électrique fonctionne éventuellement en légère surcharge pendant une période prédéterminée), et lorsque la pédale d'accélérateur est dans une position correspondant à une valeur de couple demandé supérieure ou égale audit seuil, le moteur thermique est démarré automatiquement et fournit un couple tel que la valeur du couple total fourni par la machine électrique et le moteur thermique est égale à la valeur dudit couple demandé.

Ainsi, comme le montre la figure 2, la course de la pédale d'accélérateur, qui est exprimée sur le dessin sous forme d'un pourcentage d'enfoncement, peut être séparée en deux zones :
- une zone de roulage purement électrique, pour une position de la pédale d'accélérateur correspondant à une valeur de couple demandé par le conducteur inférieure ou égale à la valeur maximale C_{MELMAX} du couple pouvant être fourni par la machine électrique (MEL) ; et
- une zone de roulage à la fois électrique et thermique (MEL + MTH), pour une position de la pédale d'accélérateur correspondant à une valeur de couple demandé strictement supérieure à C_{MELMAX}.

En effet, le démarrage automatique du moteur thermique au-delà de la première zone est nécessaire car sécuritaire : un non-démarrage ou la nécessité pour le conducteur d'effectuer une action supplémentaire pour démarrer le moteur (par exemple, appuyer sur un bouton pour quitter le mode électrique) pourrait être dangereux dans une situation d'urgence.

Une telle stratégie classique présente des inconvénients.

En effet, lorsque le véhicule est utilisé en mode ZEV forcé, comme cela existe sur de nombreux véhicules hybrides, il est souhaitable que le conducteur ait le sentiment que son moteur ne démarre pas à la moindre sollicitation de la pédale d'accélérateur.

Autrement dit, le conducteur souhaite pouvoir utiliser son véhicule en mode purement électrique sans se soucier constamment de la position de la pédale d'accélérateur et sans démarrage intempestif du moteur thermique.

La présente invention vise à répondre à ce besoin.

Dans ce but, la présente invention propose un procédé de commande du couple exercé par le groupe motopropulseur d'un véhicule automobile hybride comportant un moteur thermique et une machine électrique, remarquable en ce qu'il comporte des étapes suivant lesquelles, dans un mode de roulage où seule la machine électrique est utilisée pour mouvoir le véhicule :
lorsque la pédale d'accélérateur est dans une position correspondant à une valeur de couple demandé supérieure ou égale au couple maximal pouvant être fourni par la machine électrique et strictement inférieure à un seuil prédéterminé, le moteur thermique reste à l'arrêt et la machine électrique fournit ce couple maximal ; et
lorsque la pédale d'accélérateur est dans une position correspondant à une valeur de couple demandé supérieure ou égale à ce seuil, le moteur thermique est démarré automatiquement et fournit un couple tel que la valeur du couple total fourni par la machine électrique et le moteur thermique est égale à la valeur de couple demandé.

Ainsi, l'invention introduit une course "morte" au niveau de la pédale d'accélérateur, avant validation du démarrage du moteur thermique. Cette course morte permet au conducteur de ne pas démarrer intempestivement dès qu'il exploite les pleines capacités du système électrique, tout en garantissant un démarrage en cas d'urgence (le premier réflexe étant alors d'appuyer à fond sur la pédale d'accélérateur).

Cela permet d'augmenter la disponibilité du roulage électrique pour le conducteur tout en réduisant le nombre de démarrages intempestifs du moteur thermique.

Ainsi, l'invention apporte une amélioration notable à l'agrément de la conduite et à la perception de roulage électrique, en offrant une course de pédale d'accélérateur plus importante lors des roulages en mode électrique.

De plus, en abaissant le nombre de démarrages intempestifs du moteur thermique, l'invention permet de réduire la consommation de carburant et donc la pollution atmosphérique correspondante.

Selon une caractéristique particulière, le procédé conforme à l'invention est mis en oeuvre par un calculateur de supervision compris dans le véhicule et il comporte en outre une étape consistant à fournir en permanence une information sur la position de la pédale d'accélérateur à ce calculateur de supervision.

Dans le même but que celui indiqué plus haut, la présente invention propose également un véhicule automobile hybride comportant un groupe motopropulseur qui comporte un moteur thermique et une machine électrique, remarquable en ce qu'il comporte des moyens adaptés à mettre en oeuvre des étapes d'un procédé de commande de couple tel que succinctement décrit ci-dessus.

Selon une caractéristique particulière, ces moyens comportent un calculateur de supervision adapté à recevoir une information sur la position de la pédale d'accélérateur.

Selon une caractéristique particulière, le moteur thermique est couplé au train avant du véhicule et la machine électrique est couplée au train arrière du véhicule.

D'autres aspects et avantages de l'invention apparaîtront à la lecture de la description qui suit de modes particuliers de réalisation, donnés à titre d'exemples non limitatifs et en référence aux dessins qui l'accompagnent, dans lesquels :
- la figure 1, déjà décrite, est un schéma illustrant de façon simplifiée l'architecture générale d'un véhicule automobile hybride classique ;
- la figure 2, déjà décrite, est un graphique illustrant le mode de roulage d'un véhicule automobile hybride en fonction de la position de la pédale d'accélérateur selon l'état de la technique ; et
- la figure 3 est un graphique illustrant le mode de roulage d'un véhicule automobile hybride en fonction de la position de la pédale d'accélérateur conformément à la présente invention, dans un mode particulier de réalisation.

On considère dans le cadre de la présente invention un véhicule automobile hybride comprenant un groupe motopropulseur qui comporte un moteur thermique et une machine électrique ainsi que les autres éléments représentés sur la figure 1.

A titre d'exemple non limitatif, le moteur thermique peut être couplé au train avant du véhicule et la machine électrique peut être couplée au train arrière. Cependant, on peut choisir la configuration inverse.

Ce véhicule comporte en particulier un calculateur de supervision (non représenté sur les dessins) qui commande les calculateurs de contrôle pilotant chaque organe du véhicule.

Conformément à la présente invention, ce calculateur de supervision est adapté à recevoir notamment une information sur la position de la pédale d'accélérateur.

Le procédé de commande de couple conforme à la présente invention comporte une étape consistant à fournir en permanence cette information au calculateur de supervision. Cette information peut par exemple être fournie par un capteur de position situé au niveau de la pédale d'accélérateur.

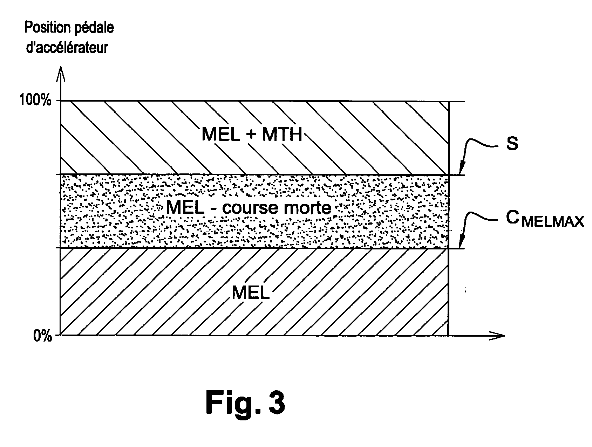

Comme le montre le graphique de la figure 3, dans un mode de roulage où seule la machine électrique est utilisée pour mouvoir le véhicule, la course de la pédale d'accélérateur, qui est exprimée sur le dessin, comme sur la figure 2, sous forme d'un pourcentage d'enfoncement, peut être séparée cette fois en trois zones :
- tant que la pédale d'accélérateur est dans une position correspondant à une valeur de couple demandé par le conducteur strictement inférieure au couple maximal C_{MELMAX} pouvant être fourni par la machine électrique, le moteur thermique est à l'arrêt et le véhicule est mis en mouvement uniquement par la machine électrique ;
- lorsque la pédale d'accélérateur est dans une position correspondant à une valeur de couple demandé supérieure ou égale au couple maximal C_{MELMAX} pouvant être fourni par la machine électrique et strictement inférieure à un seuil S prédéterminé, le moteur thermique reste à l'arrêt et la machine électrique fournit le couple maximal C_{MELMAX} ; cette deuxième zone correspond ainsi à une course "morte" de pédale, puisque dans cette zone, le GMP est saturé en couple et donc, malgré l'enfoncement supplémentaire de la pédale d'accélérateur, le véhicule n'accélère pas davantage ; et
- lorsque la pédale d'accélérateur est dans une position correspondant à une valeur de couple demandé supérieure ou égale au seuil S, le moteur thermique est démarré automatiquement et fournit un couple tel que la valeur du couple total fourni par la machine électrique et le moteur thermique est égale à la valeur de couple demandé.

L'homme du métier sait choisir la valeur du seuil S de façon à éviter de placer les occupants du véhicule dans une situation dangereuse où le GMP ne pourrait répondre à une demande de couple urgente.

La course morte de pédale introduite par l'invention a ainsi notamment pour avantages d'augmenter la disponibilité du roulage électrique et de provoquer moins de démarrages intempestifs.

## Revendications

1. Procédé de commande du couple exercé par le groupe motopropulseur d'un véhicule automobile hybride comportant un moteur thermique (10) et une machine électrique (14), **caractérisé en ce qu'**il comporte des étapes suivant lesquelles, dans un mode de roulage où seule la machine électrique (14) est utilisée pour mouvoir le véhicule :
lorsque la pédale d'accélérateur est dans une position correspondant à une valeur de couple demandé supérieure ou égale au couple maximal (C_{MELMAX}) pouvant être fourni par la machine électrique (14) et strictement inférieure à un seuil (S) prédéterminé, le moteur thermique (10) reste à l'arrêt et la machine électrique (14) fournit ledit couple maximal (C_{MELMAX}) ; et
lorsque la pédale d'accélérateur est dans une position correspondant à une valeur de couple demandé supérieure ou égale audit seuil (S), le moteur thermique (10) est démarré automatiquement et fournit un couple tel que la valeur du couple total fourni par la machine électrique (14) et le moteur thermique (10) est égale à la valeur de couple demandé.

2. Procédé selon la revendication 1, **caractérisé en ce qu'**il est mis en oeuvre par un calculateur de supervision compris dans le véhicule et **en ce qu'**il comporte en outre une étape consistant à fournir en permanence une information sur la position de la pédale d'accélérateur audit calculateur de supervision.

3. Véhicule automobile hybride comportant un groupe motopropulseur qui comporte un moteur thermique (10) et une machine électrique (14), **caractérisé en ce qu'**il comporte des moyens adaptés à mettre en oeuvre des étapes d'un procédé de commande de couple selon la revendication 1 ou 2.

4. Véhicule selon la revendication 3, **caractérisé en ce que** lesdits moyens comportent un calculateur de supervision adapté à recevoir une information sur la position de la pédale d'accélérateur.

5. Véhicule selon la revendication 3 ou 4, **caractérisé en ce que** le moteur thermique (10) est couplé au train avant du véhicule et la machine électrique (14) est couplée au train arrière du véhicule.

## Patentansprüche

1. Verfahren zum Steuern des Drehmoments, das von dem Antriebsaggregat eines Hybridkraftfahrzeugs ausgeübt wird, das eine Brennkraftmaschine (10) und einen Elektromotor (14) umfasst, **dadurch gekennzeichnet, dass** es Schritte umfasst, gemäß welchen in einem Fahrmodus, in dem nur der Elektromotor (14) zum Fortbewegen des Fahrzeugs verwendet wird:
wenn das Gaspedal in einer Position ist, die einem verlangten Drehmomentwert entspricht, der größer oder gleich dem maximalen Drehmoment (C_{MELMAX}), das von dem Elektromotor (14) geliefert werden kann, und strikt kleiner als ein vorbestimmter Schwellenwert (S) ist, die Brennkraftmaschine (10) im Stillstand bleibt und der Elektromotor (14) das maximale Drehmoment (C_{MELMAX}) liefert, und,
wenn das Gaspedal in einer Position ist, die einem verlangten Drehmoment entspricht, das größer oder gleich dem Schwellenwert (S) ist, die Brennkraftmaschine (10) automatisch gestartet wird und ein Drehmoment derart liefert, dass der Wert des Gesamtdrehmoments, das von dem Elektromotor (14) und der Brennkraftmaschine (10) geliefert wird, gleich dem verlangten Drehmomentwert ist.

2. Verfahren nach Anspruch 1, **dadurch gekennzeichnet, dass** es von einem Überwachungsrechner umgesetzt wird, den das Fahrzeug umfasst, und dass es außerdem einen Schritt umfasst, der darin besteht, ständig eine Information über die Position des Gaspedals zu dem Überwachungsrechner zu liefern.

3. Hybridkraftfahrzeug, das ein Antriebsaggregat umfasst, das eine Brennkraftmaschine (10) und einen Elektromotor (14) umfasst, **dadurch gekennzeichnet, dass** es Mittel umfasst, die angepasst sind, um Schritte eines Verfahrens zum Drehmomentsteuern nach Anspruch 1 oder 2 umzusetzen.

4. Fahrzeug nach Anspruch 3, **dadurch gekennzeichnet, dass** die Mittel einen Überwachungsrechner umfassen, der angepasst ist, um eine Information über die Position des Gaspedals zu empfangen.

5. Fahrzeug nach Anspruch 3 oder 4, **dadurch gekennzeichnet, dass** die Brennkraftmaschine (10) mit der Vorderachse des Fahrzeugs gekoppelt ist, und dass der Elektromotor (14) mit der Hinterachse des Fahrzeugs gekoppelt ist.

## Claims

1. A method for controlling the torque exerted by the power train of a hybrid automotive vehicle comprising a combustion engine (10) and an electric machine (14), **characterized in that** it comprises the following steps according to which, in a driving mode in which only the electric machine (14) is used to propel the vehicle:
when the accelerator pedal is in a position corresponding to a demanded torque value that is higher than or equal to the maximum torque (C_{MELMAX}) that the electric machine (14) can supply and strictly below a set threshold (S), the combustion engine (10) remains switched off and the electric machine (14) supplies the maximum torque (C_{MELMAX}); and
when the accelerator pedal is in a position corresponding to a demanded torque value greater than or equal to said threshold (S), the combustion engine (10) is started automatically and supplies a torque such that the value of the total torque supplied by the electric machine (14) and the combustion engine (10) is equal to the demanded torque value.

2. The method according to Claim 1, **characterized in that** it is implemented by a monitoring computer comprised in the vehicle and **in that** it further comprises a step consisting of supplying continuously information concerning the position of the accelerator pedal to said monitoring computer.

3. A hybrid automotive vehicle comprising a power train which comprises a combustion engine (10) and an electric machine (14), **characterized in that** it comprises means suited to implement steps of a torque control method according to Claim 1 or 2.

4. The vehicle according to Claim 3, **characterized in that** said means comprise a monitoring computer suited to receive information concerning the position of the accelerator pedal.

5. The vehicle according to Claim 3 or 4, **characterized in that** the combustion engine (10) is coupled to the front axle of the vehicle and the electric machine (14) is coupled to the rear axle of the vehicle.
